## Europäisches Patentamt

## European Patent Office

## Office européen des brevets

(11) Veröffentlichungsnummer: **0 243 839**
**B1**

(12) **EUROPÄISCHE PATENTSCHRIFT**

(45) Veröffentlichungstag der Patentschrift:
**18.10.89**

(51) Int. Cl.⁴: **B60R 16/02,** H02G 11/02

(21) Anmeldenummer: **87105784.0**

(22) Anmeldetag: **18.04.87**

(54) Vorrichtung zur Führung eines Stromkabels zu einem verschiebbaren Fahrzeugteil, insbesondere zu einem Schiebedach.

(30) Priorität: **02.05.86 DE 3614880**

(43) Veröffentlichungstag der Anmeldung:
**04.11.87 Patentblatt 87/45**

(45) Bekanntmachung des Hinweises auf die Patenterteilung:
**18.10.89 Patentblatt 89/42**

(84) Benannte Vertragsstaaten:
**DE ES FR GB IT SE**

(56) Entgegenhaltungen:
PATENT ABSTRACTS OF JAPAN, Band 10,
Nr. 222 (M-504)[2278], 2. August 1986; & JP - A
- 61 60345 (HINO) 28.03.1986
PATENT ABSTRACTS OF JAPAN, Band 3,
Nr. 134 (M-79), 9. November 1979, Seite 96 M 79; & JP - A
- 54 109 570 (HITACHI) 28.08.1979

(73) Patentinhaber: **Bayerische Motoren Werke
Aktiengesellschaft, Patentabteilung
AJ-3 Postfach 40 02 40 Petuelring 130,
D-8000 München 40(DE)**

(72) Erfinder: **Leistner, Rolf, Rambertweg 13,
D-8000 München 50(DE)**

(74) Vertreter: **Dexheimer, Rolf, Bayerische Motoren Werke
Aktiengesellschaft Postfach 40 02 40 Petuelring 130 -
AJ-21, D-8000 München 40(DE)**

EP 0 243 839 B1

**Beschreibung**

Die Erfindung betrifft eine Vorrichtung zur Führung eines Stromkabels zu einem verschiebbaren Fahrzeugteil, insbesondere zu einem Schiebedach, der im Oberbegriff des Hauptanspruchs angegebenen Art.

Bewegliche, elektrische oder elektronische Geräte aufnehmende Fahrzeugteile werden mit Strom- oder Meßkabel verbunden, die nicht besonders geführt sind. Dabei besteht die Gefahr, daß die Kabel beschädigt und stromführende Leiter freigelegt werden. Zumindest in einer Endlage des beweglichen Fahrzeugteils hängen die Strom- oder Meßkabel durch und verursachen Geräusche beim Anstoßen an das Fahrzeug. In nahezu gestreckter Lage können die Kabel durch Schwingbewegungen Steckverbindungen an den Kabelenden lösen.

Es ist deshalb Aufgabe der Erfindung, eine Vorrichtung zur Führung eines Stromkabels zu einem verschiebbaren Fahrzeugteil nach dem Oberbegriff des Hauptanspruchs anzugeben, die das Stromkabel in jeder Lage sicher und weitgehend schwingungsfrei führt und die an unterschiedliche Einbauverhältnisse leicht angepaßt werden kann.

Gelöst wird diese Aufgabe durch eine drehbare Kabelrolle, die von einer Feder zum Aufrollen des Stromkabels auf die Kabelrolle drehbelastet ist, wobei ein Ende des Stromkabels gegenüber der Lagerung der Kabelrolle ortsfest und die Lagerung so an dem verschiebbaren Fahrzeugteil oder an der Karosserie des Fahrzeugs befestigt ist, daß das Stromkabel etwa in der Mitte des Verschiebeweges des Fahrzeugteils nahezu vollständig auf die Kabelrolle aufgerollt ist. Ein wesentlicher Vorteil ist dabei, daß das Stromkabel immer schwingungsfrei gespannt und soweit wie möglich auf die Kabelrolle vor Beschädigung sicher aufgerollt ist. Außerdem weist das auf die Kabelrolle aufrollbare Kabelstück nur etwa die halbe Länge des Verschiebeweges des Fahrzeugteils auf, so daß sich auch das vollständig abgerollte Stromkabel von einer schwächeren Feder gestreckt halten läßt. Schließlich erfordert das kürzere Stromkabel nur einen geringen Durchmesser der Kabelrolle, so daß sich diese auch bei beengten Einbauverhältnissen leicht unterbringen läßt.

Es ist zwar durch die DE-PS 24 58 758 eine Einrichtung für die elektrische Versorgung eines beweglichen Verbrauchers bekannt, daß sich diese Einrichtung für bewegliche Fahrzeugteile eignen könnte, ist dieser Schrift jedoch nicht zu entnehmen. Die Einrichtung sieht für einen beweglichen Verbraucheranschluß und für zwei Wickeldorne zum Aufrollen der Stromkabel je einen auf einer Führungsschiene verfahrbaren Wagen vor. Dies erfordert eine aufwendige Bauweise und entlang der Führungsschiene seitliche Freiräume für die Wagen, so daß diese Einrichtung ein hohes Bauvolumen benötigt. Am Umfang der kreisförmig verlaufenden Führungsschiene sind außerdem viele Führungsrollen zur Abstützung der Stromkabel erforderlich.

Vorteilhafte Ausgestaltungen der Erfindung sind Gegenstand von Unteransprüchen.

Ein Ausführungsbeispiel der Erfindung wird anhand einer Zeichnung näher erläutert. Es zeigen:

Fig. 1 eine perspektivische Ansicht der Vorrichtung an einem Schiebedach eines Kraftfahrzeugs und

Fig. 2 einen Querschnitt durch die Achse der Kabelrolle der Vorrichtung nach Fig. 1.

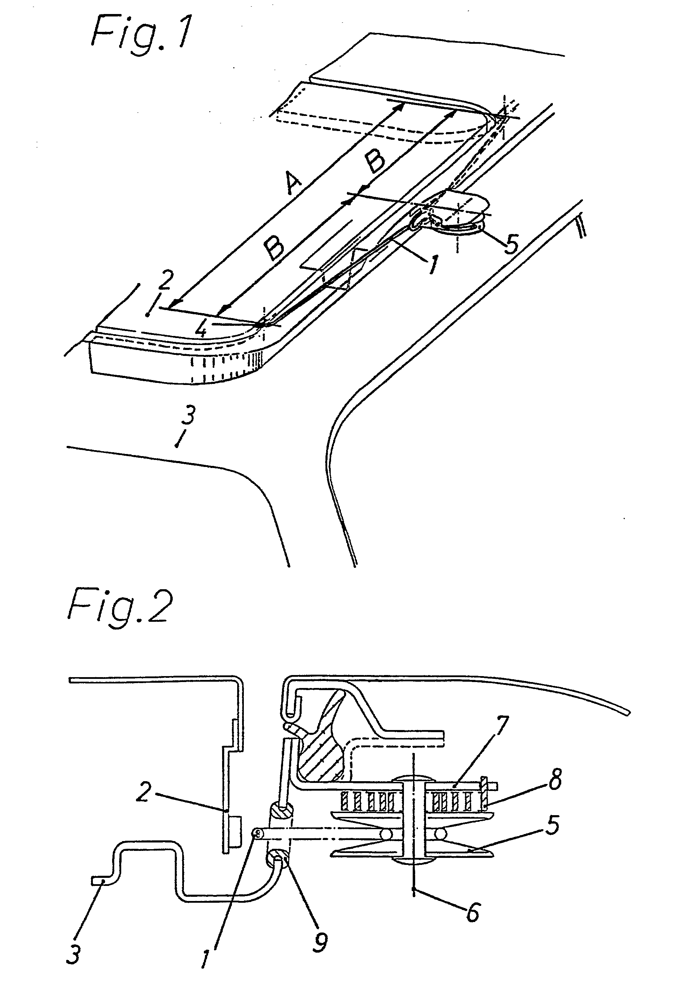

In Fig. 1 ist eine Vorrichtung zur Führung eines Stromkabels 1 zu einem Schiebedach 2 eines Fahrzeugs in perspektivischer Ansicht dargestellt. Das Schiebedach 2 ist in Längsrichtung des Fahrzeugs verschiebbar und in dem Ausführungsbeispiel mit einem Stromerzeuger verbunden, der über das Stromkabel 1 mit der Karosserie 3 des Fahrzeugs in Verbindung steht. Zwischen der Schließstellung des Schiebedaches 2 und seiner Öffnungsstellung legt der Elektroanschluß 4 des Stromkabels 1 für den Stromverbraucher den Weg A zurück. Um insbesondere ein Durchhängen oder Schwingen des Stromkabels 1 zu vermeiden ist an der Karosserie 3 etwa in der Mitte B des Weges A eine Kabelrolle 5 angeordnet, auf die das Stromkabel 1 aufwickelbar ist.

Wie in Fig. 2 dargestellt, ist die seitlich neben dem Schiebedach 2 an der Karosserie 3 angeordnete Kabelrolle 5 um eine etwa vertikale Drehachse 6 drehbar, die an einem Schenkel eines karosseriefesten Stützelements 7 ausgebildet ist. Um das Stromkabel 1 auf Spannung zu halten, ist die Kabelrolle 5 von einer Feder 8 zum selbsttätigen Aufrollen des Stromkabels 1 auf die Kabelrolle 5 drehbelastet. Durch die Anordnung der Kabelrolle 5 etwa in der Mitte des Verschiebeweges A ist zwischen dem Elektroanschluß 4 und der Kabelrolle 5 lediglich ein kurzes Kabelstück erforderlich, das bereits von einer schwächeren Feder 8 in gestreckter Lage gehalten werden kann. Das Stromkabel 1 kann dadurch keine Bewegungen ausführen, die durch Anschlagen an der Karosserie 3 oder an dem Schiebedach 2 beispielsweise Geräusche verursachen. Zur Führung und Abstützung des Stromkabels 1 im Bereich der Kabelrolle 5 ist eine karosserieseitig befestigte Führungsplatte 9 vorgesehen, die eine zentrale, dem Querschnitt des Stromkabels 1 angepaßte Durchtrittsöffnung aufweist. Anstelle der Führungsplatte 9 könnten aber auch Führungsrollen vorgesehen sein, zwischen denen das Stromkabel 1 hindurchgeführt ist. Die Ebene der Führungsplatte 9 verläuft parallel zu dem seitlichen Rand des Schiebedaches 2. Um eine Beschädigung des Stromkabels 1 beim Hindurchgleiten durch die Durchtrittsöffnung der Führungsplatte 9 zu vermeiden, sind die Umgangskanten der Durchtrittsöffnung gerundet.

Bei dem beschriebenen Ausführungsbeispiel ist die Kabelrolle karosserieseitig befestigt. Ebenso könnte diese aber auch an dem Schiebedach und um eine beliebige Drehachse drehbar angeordnet sein.

**Patentansprüche**

1. Vorrichtung zur Führung eines Stromkabels (1) zu einem verschiebbaren Fahrzeugteil (2), insbesondere zu einem Schiebedach (2), gekennzeichnet durch eine drehbare Kabelrolle (5), die von einer Feder (8) zum Aufrollen des Stromkabels (1) auf die Kabelrolle (5) drehbelastet ist, wobei ein Ende des Stromkabels (1) gegenüber der Lagerung (Stützelement 7) der Kabelrolle (5) ortsfest und die Lagerung (Stützelement 7) so an dem verschiebbaren Fahrzeugdach (Schiebedach 2) oder an der Karosserie (3) des Fahrzeuges befestigt ist, daß das Stromkabel (1) etwa in der Mitte des Verschiebeweges des Fahrzeugteils (Schiebedach 2) nahezu vollständig auf die Kabelrolle (5) aufgerollt ist.

2. Vorrichtung nach Anspruch 1, dadurch gekennzeichnet, daß die Kabelrolle (5) um eine etwa vertikale Drehachse (6) drehbar ist.

3. Vorrichtung nach Anspruch 1 oder 2, mit einem etwa horizontal längsverfahrbaren Fahrzeugteil, dadurch gekennzeichnet, daß die Kabelrolle (5) seitlich neben dem Fahrzeugteil (Schiebedach 2) an der Karosserie (3) befestigt ist.

4. Vorrichtung nach Anspruch 1 oder 3, dadurch gekennzeichnet, daß das Stromkabel (1) durch Umlenkrollen geführt ist.

5. Vorrichtung nach Anspruch 4, dadurch gekennzeichnet, daß das Stromkabel (1) zwischen zwei an der Karosserie (3) angeordneten Führungsrollen geführt ist, deren Achsen zueinander und zur Drehachse (6) der Kabelrolle (5) parallel sind und von dem seitlichen Rand des Fahrzeugteils (Schiebedach 2) einen etwa gleichen Abstand aufweisen.

**Revendications**

1. Dispositif pour le guidage d'un câble électrique (1) vers une partie coulissante (2) d'un véhicule, spécialement vers un toit coulissant (2), caractérisé par une poulie d'enroulement (5) du câble montée de façon à pouvoir tourner, et sur la rotation de laquelle un ressort (8) agit à l'effet d'enrouler le câble électrique (1) sur cette poulie d'enroulement (5), une extrémité du câble électrique (1) étant en position fixe par rapport au support (élément, d'appui 7) de la poulie d'enroulement (5) du câble, et le support (élément d'appui 7) étant fixe de telle manière à la partie coulissante (toit coulissant 2) du véhicule ou à la carrosserie (3) du véhicule, que le câble électrique (1), à peu près au milieu de la course de coulissement de la partie coulissante (toit coulissant 2) du véhicule, se trouve enroulé presque entièrement sur la poulie d'enroulement (5) du câble.

2. Dispositif selon la revendication 1, caractérisé en ce que la poulie d'enroulement (5) du câble peut tourner autour d'un axe de rotation (6) a peu vertical.

3. Dispositif selon la revendication 1 ou 2 avec une partie de véhicule déplaçable en long a horizontalement, caractérisé en ce que la peu près poulie d'enroulement (5) du câble est fixée latéralement à la carrosserie (3) à côté de la partie coulissante (toit coulissant 2) du véhicule.

4. Dispositif selon la revendication 1 ou 3, caractérisé en ce que le câble électrique (1) est guide par des galets de renvoi.

5. Dispositif selon la revendication 4, caractérisé en ce que le câble électrique (1) passe entre deux galets de guidage montés sur la carrosserie (3), et dont les axes sont parallèles l'un à l'autre et à l'axe de rotation (6) de la poulie d'enroulement (5) du câble et se présentent à une distance qui est à peu près la même du bord latérale de la partie coulissante (toit coulissant 2) du véhicule.

**Claims**

1. A device for guiding an electric cable (1) to a sliding part (2) of a vehicle, especially a sliding roof (2), characterised by a rotatable cable pulley (5) which is loaded in rotation by a spring (8) for winding the electric cable (1) on to the pulley (5), one end of the cable (1) being held stationary relative to the bearing (supporting component 7) of the roller (5) and the bearing (supporting component 7) being secured to the slidable vehicle roof (sliding roof 2) or to the vehicle body (3) so that the cable (1) is wound almost completely on to the pulley (5) when the part of the vehicle (sliding roof 2) is approximately in the centre of its travel.

2. A device according to claim 1, characterised in that the pulley (5) is rotatable around a substantially vertical axis of rotation (6).

3. A device according to claim 1 or 2, comprising a vehicle part which can slide approximately horizontally in the longitudinal direction, characterised in that the pulley (5) is secured to the body (3) at the side near the part of the vehicle (the sliding roof 2).

4. A device according to claim 1 or 3, characterised in that the cable (1) is guided by guide pulleys.

5. A device according to claim 4, characterised in that the cable (1) is guided by two pulleys disposed on the body (3) and having their axes parallel to one another and to the axis of rotation (6) of the cable pulley (5) and are at substantially equal distances from the side edge of the part of the vehicle (the sliding roof 2).

*Fig.1*

*Fig.2*